# EUROPEAN PATENT SPECIFICATION

(11) **EP 2 103 231 B1**
(45) Date of publication and mention of the grant of the patent: **29.08.2012**
(21) Application number: 09155372.7
(22) Date of filing: 17.03.2009
(51) Int. Cl.: A45C 11/00

(54) **Cover for an electronic device**
Abdeckung für eine elektronische Vorrichtung
Couvercle pour un dispositif électronique

(30) Priority: 18.03.2008 GB 0805024
(43) Date of publication of application: 23.09.2009
(73) Proprietor: Lazerbuilt Limited, Stevenage Hertfordshire SG1 2BH (GB)
(72) Inventor: Madden, David John, Welwyn Garden City, Hertfordshire AL8 6RA (GB)
(74) Representative: Ackroyd, Robert

(56) References cited:
- DE-U1-202006 016 552
- US-A- 5 526 924
- US-A1- 2004 166 910
- US-A1- 2008 257 921

## Description

This invention relates to covers for electronic devices. Examples of such devices are mobile telephones, music players of various kinds, including MP3 players, personal digital assistants (PDAs), etc.

Such devices are handled considerably in use and, as a result, tend to become marked or smeared, with fingerprints or otherwise. This is a particular problem with devices having a dark and/or highly polished body or screen surface, for example an LCD screen surface, on which marks of the kind mentioned are particularly visible.

WO-A-2004/056231 discloses a knitted cover for a delicate object, for example a mobile telephone. The cover may have an interior lining, specifically stated to have a protective cushioning, humidifying or non-slip effect.

DE-U-202006016552 discloses a holding means for an electronic device comprising a flat insertion element having a soft surface on at least one flat side and lying on a wall section, the flat side having a microfibre fabric on the soft surface.

US-A-2004/166910 discloses a case for a mobile telephone comprising an elastic member having corrugated protrusions which is attached to an inner side of the case so that the surface of the telephone is cleaned by simple actions of inserting and removing it with respect to the case.

US-A-5526924 discloses a case suitable for an electronic device in which the fabric is preferably a type of soft material which is particularly suited to cleaning.

The present invention provides a cover for an electronic device, the cover comprising an outer envelope knitted resiliently stretchable flexible material defining an interior space to receive the device and having an opening through which the device can be introduced into the interior space, at least a part of the surface of the interior space being formed from a microfibre lining material which has a polishing and/or cleaning effect on the device upon movement of the device relative thereto.

Being formed from a resiliently stretchable material, the outer envelope provides a snug fit around a device received in the interior space.

The lining of the cover of the present invention thus has a specific polishing/cleaning effect which addresses the problem set out above. Upon introduction of the device into the interior space, and upon its removal therefrom, the device is polished and/or cleaned and unsightly smears and marks are removed. A similar polishing/cleaning effect can also be achieved by manipulation of the device whilst received in the cover.

Preferably, the microfibre material is a fabric formed from fibres or filaments of one denier (0.1111 tex) or less. In other words, 9000m of such fibres or filaments have a mass of 1 gram or less.

Preferably the fabric is warp knitted.

The fibres or filaments from which the fabric is formed are preferably composed of an 80%/20% blend of polyester and polyamide. Advantageously, the fibres or filaments are of triangular cross-section and consist of a polyamide core and a polyester overlayer.

Advantageously, the outer envelope is formed by circular knitting.

Conveniently, the lining material is provided by an inner envelope of microfibre material which is located in the interior space and provides the said polishing and/or cleaning effect.

Advantageously, the inner envelope in which the inner envelope is pleated and/or of resiliently stretchable material.

In other embodiments the cover includes at least one panel of microfibre material extending over at least part of the surface of the interior space to provide the said polishing and/or cleaning effect.

Preferably, a respective panel of microfibre material extends over at least part of each of two confronting major surfaces of the outer envelope.

Conveniently, the panel(s) extend over substantially all of the surface of the interior space.

Advantageously, the panel(s) is/are pleated and/or of resiliently stretchable material

Preferably, the cover is of a generally rectangular shape and has its opening extending along one of its shorter sides.

Advantageously, the outer envelope is formed from a resiliently stretchable material to provide a snug fit around a device received in the interior space.

Preferably, the cover includes means for at least partially closing the opening.

Conveniently, the closing means comprises an elasticated portion of the outer envelope extending around the opening.

Alternatively, the closing means comprises a drawstring extending around the opening.

Embodiments of the invention will now be described by way of example with reference to the drawing of this specification. In the drawings:
figure 1 is a vertical sectional view of a cover according to the invention, shown somewhat schematically,
figure 2 is a sectional view on the line II-II of figure 1.
figure 3 is a view corresponding to figure 1 of another cover according to the invention, and
figure 4 is a sectional view on the line IV-IV of figure 3.

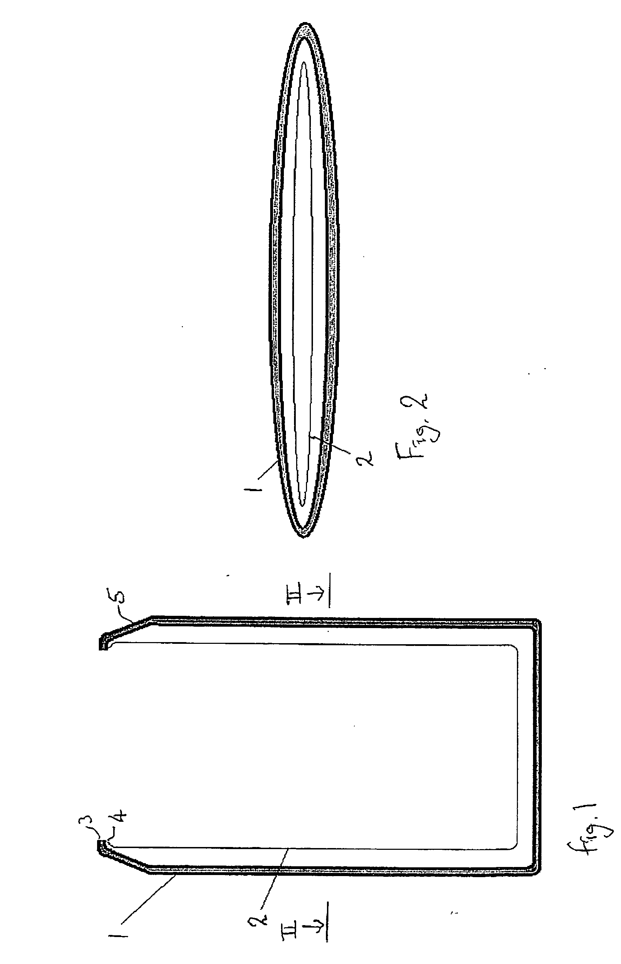

The cover shown in figure 1 has an outer envelope 1 and an inner envelope 2. Each is generally rectangular in plan as seen in figure 1 and has an open mouth 3, 4. The envelopes are joined together around the mouths, for example by stitching (not shown). Both envelopes taper towards their respective mouths, the outer envelope the more so to provide a slanting shoulder 5 as can be seen in figure 1. The slanting shoulder 5 can be formed by elastication of the knitted material, for example by incorporation of elastic threads. The elasticated shoulder serves to retain an electronic device in the cover.

Instead of or in addition to the elastication, the shoulder may be fitted with a drawstring which may be long enough to act as a neck or wrist loop. The drawstring may be partially external, for decorative effect.

As will be evident from figure 2, the cover has the shape of a rather elongate ellipse in transverse section.

The outer envelope 1 is knitted, for example from cotton, wool, elastane or polyamide yarn, or a yarn comprising one or more of these. In this particular embodiment, the knitting is circular so the envelope is a continuous tube without longitudinal seams. Alternatively, the envelope may be formed by folding a single piece of material and thereby have two seams, either both side seams or one a side seam and one an end seam. In other alternatives, the envelope is formed from two or more pieces of knitted material joined by appropriate sewn seams.

One particular advantage of the knitted construction described is that it facilitates the formation of articles having bright and varied colours, attractive colours and distinctive markings.

The inner envelope 2 is formed from a microfibre material, in this case a fabric which is warp knitted from fibres which are formed from filaments which are an 80%/20% blend of polyester and polyamide and have a linear mass density of 1 denier or less. The inner envelope is formed by folding a single piece of material in half and joining the folded halves together by sewing along one longitudinal side edge and at the end opposite the mouth. In other embodiments, the inner envelope 2 is formed from two or more pieces joined together by sewing.

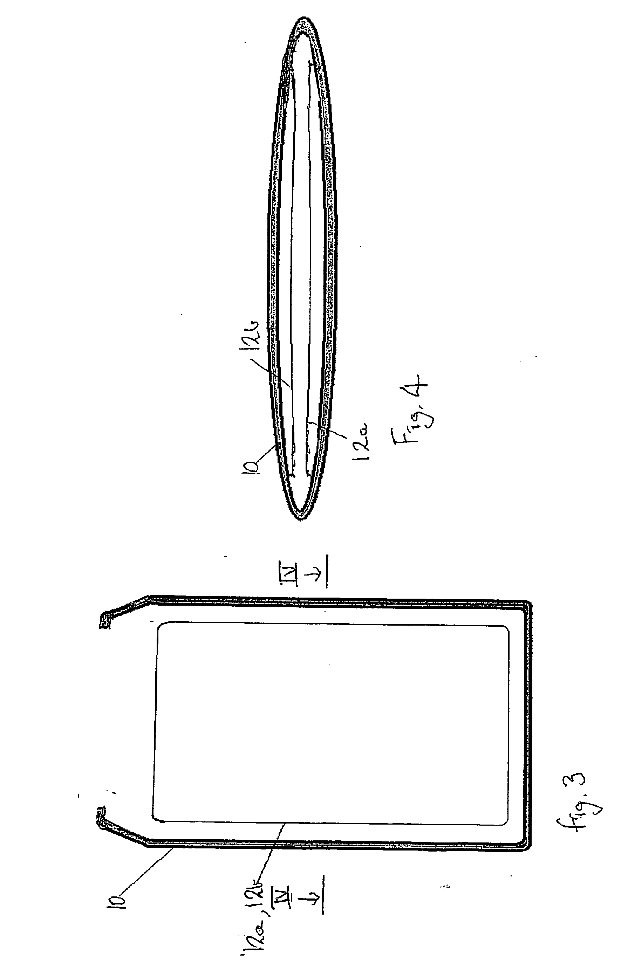

The cover shown in figures 3 and 4 has an outer envelope 10 identical to that shown in figures 1 and 2. The cover differs from that of figures 1 and 2 in that the inner envelope 2 is replaced by two rectangular panels 12a, 12b, of the microfibre material. The panels 12a, 12b are secured to the inner surfaces of the outer envelope 10 by adhesive (not shown). They could be sewn instead, or in addition. If the outer envelope 10 is formed by circular knitting, the envelope may be inverted to facilitate attachment of the panels 12a, 12b.

Use of the covers described in conjunction with an electronic device will now be described. The device, in this case a mobile telephone dimensioned to fit in the interior space, is introduced into the interior space, the material of the outer envelope 1, 10 preferably stretching during the process. The stretching of the cover over the object results in the microfibre lining 2, 12a, 12b having a polishing and cleaning effect on the device, with the result that any unsightly smears or marks are removed. The same effect is achieved on removal of the device. Further, manipulation or movement of the cover relative to the device will have a similar effect.

In a modification of either embodiment described, the inner envelope is pleated and/or formed from resiliently stretchable material.

## Claims

1. A cover for an electronic device, the cover comprising an outer envelope (1; 10) defining an interior space to receive the device and having an opening (3) through which the device can be introduced into the interior space, at least a part (2; 12a, 12b) of the surface of the interior space being formed from a microfibre lining material which has a polishing and/or cleaning effect on the device upon movement of the device relative thereto, **characterised in that** the outer envelope is of knitted resiliently stretchable flexible material

2. A cover according to claim 1, in which the microfibre material is a fabric formed from filaments of one denier or less.

3. A cover according to claim 1 or 2, in which the microfibre material is fabric formed from filaments or fibres which are composed of an 80%/20% blend of polyester and polyamide.

4. A cover according to any preceding claim, in which the outer envelope is formed by circular knitting.

5. A cover according to any preceding claim, in which the lining material is provided by an inner envelope (2) of microfibre material which is located in the interior space and provides the said polishing and/or cleaning effect.

6. A cover according to claim 5, in which the inner envelope is pleated and/or of resiliently stretchable material.

7. A cover according to any of claims 1 to 4, including at least one panel (12a, 12b) of microfibre material extending over at least part of the surface of the interior space to provide the said polishing and/or cleaning effect.

8. A cover according to claim 7, in which a respective panel (12a, 12b) of microfibre material extends over at least part of each of two confronting major surfaces of the outer envelope.

9. A cover according to claim 7 or 8, in which the panel(s) extend over substantially all of the surface of the interior space.

10. A cover according to any of claims 7 to 9, in which the panel(s) is/are pleated and/or of resiliently stretchable material.

11. A cover according to any preceding claim, which is of a generally rectangular shape and has its opening (3) extending along one of its shorter sides.

12. A cover according to any preceding claim, including means for at least partially closing the opening.

13. A cover according to claim 12, in which the closing means comprises an elasticated portion of the outer envelope extending around the opening.

14. A cover according to claim 12, in which the closing means comprises a drawstring extending around the opening.

## Patentansprüche

1. Abdeckung für ein elektronisches Gerät, wobei die Abdeckung eine Außenhülle (1; 10) umfasst, die einen Innenraum zur Aufnahme des Gerätes definiert und eine Öffnung (3) aufweist, durch die das Gerät in den Innenraum eingeführt werden kann, wobei wenigstens ein Teil (2; 12a, 12b) der Oberfläche des Innenraums von einem Mikrofaserauskleidungsmaterial gebildet wird, das bei Bewegungen des Geräts relativ dazu einen Polier- und/oder Reinigungseffekt auf das Gerät ausübt, **dadurch gekennzeichnet, dass** die Außenhülle aus einem gestrickten, elastisch dehnbaren flexiblen Material gebildet ist.

2. Abdeckung nach Anspruch 1, wobei das Mikrofasermaterial ein Gewebe ist, das aus Fäden von einem Denier oder weniger gebildet ist.

3. Abdeckung nach Anspruch 1 oder 2, wobei das Mikrofasermaterial ein Gewebe ist, das aus Fäden oder Fasern gebildet ist, die aus einem Polyester- und Polyamidgemisch von 80 %/20 % zusammengesetzt ist.

4. Abdeckung nach einem der vorherigen Ansprüche, wobei die Außenhülle durch Rundstricken gebildet ist.

5. Abdeckung nach einem der vorherigen Ansprüche, wobei das Auskleidungsmaterial von einer Innenhülle (2) aus Mikrofasermaterial bereitgestellt wird, das sich im Innenraum befindet und den genannten Polier- und/oder Reinigungseffekt ausübt.

6. Abdeckung nach Anspruch 5, wobei die Innenhülle plissiert und/oder aus einem elastisch dehnbaren Material gebildet ist.

7. Abdeckung nach einem der Ansprüche 1 bis 4, wobei wenigstens eine Sektion (12a, 12b) aus Mikrofasermaterial über wenigstens einen Teil der Oberfläche des Innenraums verläuft, um den genannten Polier- und/oder Reinigungseffekt zu erzielen.

8. Abdeckung nach Anspruch 7, bei der eine jeweilige Sektion (12a, 12b) von Mikrofasermaterial über wenigstens einen Teil von jeder von zwei einander konfrontierenden Hauptflächen der Außenhülle verläuft.

9. Abdeckung nach Anspruch 7 oder 8, wobei die Sektion(en) über im Wesentlichen die gesamte Oberfläche des Innenraums verläuft/verlaufen.

10. Abdeckung nach einem der Ansprüche 7 bis 9, bei der die Sektion(en) plissiert und/oder aus einem elastisch dehnbaren Material gebildet ist/sind.

11. Abdeckung nach einem der vorherigen Ansprüche, die eine allgemein rechteckige Form hat und deren Öffnung (3) entlang einer ihrer kürzeren Seiten verläuft.

12. Abdeckung nach einem der vorherigen Ansprüche mit Mitteln zum wenigstens teilweisen Verschließen der Öffnung.

13. Abdeckung nach Anspruch 12, wobei das Verschließmittel einen elastischen Abschnitt der Außenhülle umfasst, der um die Öffnung herum verläuft.

14. Abdeckung nach Anspruch 12, wobei das Verschließmittel eine um die Öffnung herum verlaufende Kordel umfasst.

## Revendications

1. Couvercle de dispositif électronique, le couvercle comprenant une enveloppe externe (1 ; 10) définissant un espace intérieur pour recevoir le dispositif et ayant une ouverture (3) à travers laquelle le dispositif peut être introduit dans l'espace intérieur, au moins une partie (2 ; 12a, 12b) de la surface de l'espace intérieur étant formée dans un tissu microfibre de doublure qui a un effet de polissage et/ou de nettoyage sur le dispositif au mouvement du dispositif par rapport à elle, **caractérisé en ce que** l'enveloppe externe est en tissu tricoté souple élastiquement étirable.

2. Couvercle selon la revendication 1, dans lequel le tissu microfibre est une étoffe formée de filaments d'un denier ou moins.

3. Couvercle selon la revendication 1 ou 2, dans lequel le tissu microfibre est une étoffe formée de filaments ou fibres composées d'un mélange de 80%/20% de polyester et de polyamide.

4. Couvercle selon l'une quelconque des revendications précédentes, dans lequel l'enveloppe externe est formée par tricotage circulaire.

5. Couvercle selon l'une quelconque des revendications précédentes, dans lequel le tissu de doublure est constitué par une enveloppe interne (2) de tissu microfibre qui est placée dans l'espace intérieur et produit ledit effet de polissage et/ou nettoyage.

6. Couvercle selon la revendication 5, dans lequel l'enveloppe interne est plissée et/ou réalisée en un tissu élastiquement étirable.

7. Couvercle selon l'une quelconque des revendications 1 à 4, comportant au moins un panneau (12a, 12b) de tissu microfibre s'étendant par-dessus au moins une partie de la surface de l'espace intérieur afin de produire ledit effet de polissage et/ou nettoyage.

8. Couvercle selon la revendication 7, dans lequel un panneau respectif (12a, 12b) de tissu microfibre s'étend par-dessus au moins une partie de chacune de deux surfaces principales opposées de l'enveloppe externe.

9. Couvercle selon la revendication 7 ou 8, dans lequel le ou les panneaux s'étendent sensiblement par-dessus toutes les surfaces de l'espace intérieur.

10. Couvercle selon l'une quelconque des revendications 7 à 9, dans lequel le ou les panneaux sont plissés et/ou réalisés en un tissu élastiquement étirable.

11. Couvercle selon l'une quelconque des revendications précédentes, lequel est d'une forme généralement rectangulaire et dont l'ouverture (3) s'étend le long de l'un de ses plus courts côtés.

12. Couvercle selon l'une quelconque des revendications précédentes, comportant un moyen pour fermer au moins partiellement l'ouverture.

13. Couvercle selon la revendication 12, dans lequel le moyen de fermeture comprend une partie élastique de l'enveloppe externe s'étendant autour de l'ouverture.

14. Couvercle selon la revendication 12, dans lequel le moyen de fermeture comprend un cordon s'étendant autour de l'ouverture.
